# EUROPÄISCHE PATENTSCHRIFT

(11) **EP 1 093 910 B1**
(45) Veröffentlichungstag und Bekanntmachung des Hinweises auf die Patenterteilung: **15.12.2010**
(21) Anmeldenummer: 00122601.8
(22) Anmeldetag: 17.10.2000
(51) Int. Cl.: B32B 7/06, B32B 29/00, G09F 7/12, C09J 7/02

(54) **Trägermaterial mit steuerbaren Trenneigenschaften für PVC-Filme**
Laminated carrier material with controllable release characteristics for PVC films
Matériau support laminé ayant des caractéristiques de séparation contrôlables pour films en chlorure de polyvinyl

(30) Priorität: 18.10.1999 US 420061
(43) Veröffentlichungstag der Anmeldung: 25.04.2001
(73) Patentinhaber: Felix Schoeller Technical Papers, Inc., Pulaski, NY 13142 (US)
(72) Erfinder: Woodward, Antony Ian, Pulaski, NY 13142 (US); Gu, Jiren, Dr., N. Syracuse, NY 13212 (US)
(74) Vertreter: Cohausz & Florack

(56) Entgegenhaltungen:
- EP-A- 0 150 772
- FR-A- 2 202 521
- FR-A- 2 545 091
- US-A- 5 643 388

## Beschreibung

### TECHNISCHES FELD DER ERFINDUNG

Die Erfindung betrifft einen Träger mit Trenneigenschaften (Releaseeigenschaften) für Polymerfilme, die auf den Träger ohne eine besondere Haftschicht aufgetragen und zu Dekorationszwecken benutzt werden, sogenannte Static Cling Filme.

### HINTERGRUND DER ERFINDUNG

Für Dekorationszwecke sind zwei Arten von Polymerfilmen bekannt. Da sind die selbstklebenden Filme mit einer Klebebeschichtung. Diese Filme verlangen einen Träger, der mit einer Silikontrennschicht versehen ist. Sogenannte Static Cling Filme haben im Gegensatz dazu keine Klebebeschichtung. Diese Filme verlangen eine glatte Oberfläche und werden durch leichten Druck auf den permanenten Träger aufgebracht.

Die Polymerfolien für Static Cling Filme sind im allgemeinen plastifizierte PVC-Folien (Vinyl-Folien) und werden zur Dekoration von Fenstern, Metallflächen und anderen glatten Gegenständen verwendet. Zur Herstellung, Transport und Lagerung der Static Cling Filme ist ein Träger erforderlich. An diesen Träger werden unterschiedliche Anforderungen wie gute Festigkeit, Trenneigenschaften und Alterungsbeständigkeit der Trenneigenschaften gestellt.

Als Unterlage eignet sich Papier, das mit einer pigmenthaltigen Schicht beschichtet und durch Kontakt mit einem heißen, hochglänzenden Zylinder getrocknet wird. Man erhält dadurch eine Unterlage mit einer glänzenden Oberfläche. Geeignet sind aber auch extrusionsbeschichtete Papiere. Als Polymer wird hier oftmals ein Polyolefin verwendet. Durch den Einsatz entsprechender Kühlzylinder werden hochglänzende Oberflächen hergestellt.

Die US 5 643 388 beschreibt ein Trägermaterial für Vinyl-Folien (Static Cling Filme), das aus einem Basispapier, einer Pigmentschicht und einer darauf angeordneten Polyethylenschicht besteht. Die Polyethylenschicht wird zur Erhöhung der Oberflächenspannung einer Coronabestrahlung unterzogen. Nachteilig an diesem Trägermaterial ist die geringe Alterungsbeständigkeit, da die Coronabestrahlung in kurzer Zeit ihre Wirkung verliert und die Haftung der Vinyl-Folie dadurch beeinträchtigt wird.

Die FR 2 202 521 beschreibt Verbundschichten aus Papier und einer Kunststofffolie, die durch einen Kleber miteinander dauerhaft oder trennbar verbunden sind. Mit einer Ausführungsform wird ein Klebstoff eingesetzt, der eine Trennung eines zweiten Blatts erlaubt, welches ein direkt auf den Leim aufgebrachtes Papier sein kann oder ein Papier, auf das eine Polyvinylschicht aufgebracht worden ist. Der Verbund aus Papier und Polyvinylschicht lässt sich Dank des eingesetzten Klebstoffs von dem Papier als Träger trennen.

Die EP 0 150 772 A2 beschreibt ein Trennpapier mit einem Unterstrich aus einer seifenfreien Acrylharzemulsion und einer oxidierten Stärke, die zwischen einem Trägerpapier und einer Trennschicht angeordnet ist. Durch diese Unterschicht soll eine gute Haftung an Trennmitteln bewirkt werden.

Die FR 2 545 091 A1 beschreibt einen Silikonpapierersatz, also ein Material zum Schutz von Klebstoffflächen. Das als Silikonpapierersatz beschriebene Schutzmaterial weist einen Film aus einem Gemisch von 50 - 85 Gew.-% mindestens eines Polymeren aus der aus LDPE, Polyamiden, Polyvinylacetat, PVA gebildeten Gruppe und mindestens einer Metallseife auf. Dieser Film ist für den Kontakt mit einem Klebstoff ausgebildet.

### ZUSAMMENFASSUNG DER ERFINDUNG

Aufgabe der Erfindung ist es, ein Trägermaterial mit Trenneigenschaften für Vinyl-Folien, umfassend einen Träger, der ein Rohpapier, eine aus einem thermoplastischen Harz erzeugte und auf das Rohpapier aufgebrachte Polymerschicht und eine Trennschicht umfasst, wobei die Trennschicht gebildet ist durch ein Gemisch aus Styrol/Butadien-Copolymer, Polyvinylacetat und einem Vernetzungsmittel und die Trennschicht auf der Polymerschicht angeordnet ist.

Acrylpolymer, Styrol/Acryl-Polymer, Acrylonitrilpolymer und Gemischen derselben enthält.

Überraschend wurde festgestellt, daß durch Aufbringen der sogenannten Trennschicht auf die Polyolefinoberfläche die geringen Adhäsionseigenschaften des Polyolefinfilms für Vinylfilme überwunden werden.

Die Trennschicht muß lediglich mit einem sehr geringen Auftragsgewicht aufgetragen werden. Der Hauptbestandteil der Trennschicht ist ein Polymer oder eine Polymermischung, die darüber hinaus die Alterungsbeständigkeit gegenüber hauptsächlich Pigment enthaltenden Beschichtungszubereitungen erhöht.

Die erfindungsgemäße Trennschicht liefert eine gute Benetzbarkeit und starke Adhäsion an der Polyolefinoberfläche und eine kontrollierte Adhäsion zu Vinylfilmen bei Raumtemperatur sowie hervorragende Ergebnisse bei Alterungstests nach 24 Stunden bei 71°C.

### DETAILLIERTE BESCHREIBUNG DER BEVORZUGTEN AUSFÜHRUNGSFORMEN

Die Polymere der Trennschicht können als Lösung, Suspension oder Emulsion vorliegen.

Das Polymer der Trennschicht ist ein Gemisch aus einem Styrol/Butadien-Copolymer und einem Polyvinylacetat. Das Verhältnis Styrol/Butadien-Copolymer zu Polyvinylacetat liegt im Bereich von 1:10 bis 10:1, bevorzugt wird der Bereich von 2:8 bis 8:2.

Gemäß einer weiteren bevorzugten Ausführungsform wird das zuvor genannte Beschichtungsgemisch als Emulsion auf das harzbeschichtete Papier aufgetragen.

Gemäß einer bevorzugten Ausführungsform werden der Polymerzusammensetzung, die zur Erzeugung der Trennschicht verwendet wird, Vernetzungsmittel zugegeben. Die Verwendung eines Vernetzungsmittels verbessert die Alterungsbeständigkeit zusätzlich. Die Menge des Vernetzungsmittels beträgt 0,1 bis 3 Gew.%, bezogen auf das Gewicht des getrockneten Films. Bevorzugte Vernetzungsmittel sind polyfunktionelle Aziridine, die trifunktionelle Polymere und befähigt zum Vernetzen von Carboxyl- und Hydroxylgruppen sind. Grundsätzlich sind jedoch alle Vernetzungsmittel, die die zuvor genannten Gruppen vernetzen können, geeignet.

Zur weiteren Steuerung der Haftung oder Trenneigenschaften des Vinylfilms, der auf die Trennschicht des Trägers aufgebracht ist, können der Trennschicht-Zusammensetzung Pigmente wie Titandioxid, Calciumcarbonat, Aluminiumoxid und/oder Silica zugesetzt werden. Die Teilchengröße dieser Pigmente kann im Bereich von etwa 0,1 bis 1000 nm, vorzugsweise zwischen 1 und 500 nm liegen. Ein besonders bevorzugtes Pigment ist kolloidales Silica. Der Pigmentgehalt in der Schicht sollte nicht größer als etwa 40 Gew.% sein und sollte vorzugsweise im Bereich von etwa 5 bis 20 Gew.% liegen.

Die Trennschicht-Zusammensetzung kann mit allen bekannten Auftragsverfahren und Dosierverfahren aufgetragen werden wie Walzenauftrag, Gravur- oder Nippverfahren und Luftbürsten- oder Rollrakeldosierung. Das Auftragsgewicht der Trennschicht oder der Releaseschicht beträgt etwa 0,1 bis 10 g/m², vorzugsweise 0,2 bis 5 g/m².

Das erfindungsgemäße Trägermaterial umfaßt ein Basispapier, das aus einem Rohpapier und einer auf dem Rohpapier angeordneten thermoplastischen Polymerschicht zusammengesetzt ist. Das Flächengewicht des Rohpapiers beträgt 20 bis 250 g/m², vorzugsweise etwa 50 bis 200 g/m². Als Zellstoffe zur Herstellung des Rohpapiers eignen sich alle Cellulosefasern und synthetischen Fasern. Nadelholzzellstoff und Laubholzzellstoff, alkalisch oder sauer aufgeschlossen, können verwendet werden. Alle bekannten Leimungsmittel und die Naßfestigkeit verbessernden Mittel, die in der Papierindustrie verwendet werden, können zum Leimen benutzt werden. Vorzugsweise ist das Papier mit einem neutralen oder alkalischen Leimungsmittel geleimt. Das Papier kann weitere Additive wie Farbstoffe enthalten. Das Papier kann auch ein oberflächengeleimtes Papier sein.

Das thermoplastische Harz für die Harzschicht auf dem Rohpapier ist ein Polyolefin wie Polyethylen, Polypropylen, Polymethylpenten und Polybutylen und Copolymere von zwei oder mehreren Olefinen oder deren Mischungen, die zur Extrusion geeignet sind. Insbesondere bevorzugt sind alle Sorten von Polyethylenen wie hochdichtes Polyethylen (HDPE), niederdichtes Polyethylen (LDPE), lineares niederdichtes Polyethylen (LLDPE) und deren Gemische. Weitere geeignete thermoplastische Harze sind Polyester, Polycarbonate, Polyurethane, Polyamide oder Polyvinylalkohol.

Das thermoplastische Harz kann durch Extrusionsbeschichtung aufgebracht werden. Zur Erzielung einer möglichst glatten Oberfläche wird bei der Extrusion ein glänzender Kühlzylinder verwendet.

Vorzugsweise ist die Rauhigkeit Rz der Harzoberfläche kleiner als etwa 2,0 µm. Gemäß einer besonders bevorzugten Ausführungsform der Erfindung beträgt die Rauhigkeit Rz 0,9 bis 1,8 µm.

Das Auftragsgewicht der auf das Rohpapier aufgebrachten Harzschicht beträgt 10 bis 50 g/m², insbesondere bis zu etwa 35 g/m².

Die folgenden Beispiele dienen der weiteren Erläuterung der Erfindung.

### Beispiel 1

Ein Rohpapier, enthaltend 31 Gew.% Nadelholzsulfatzellstoff und 69 Gew.% Laubholzzellstoff ist neutral geleimt. Dieses Rohpapier hat ein Flächengewicht von 152 g/m² und eine Dicke von 155 µm. Auf das Rohpapier wurde mittels Schmelzextrusion ein Polyethylen niederer Dichte (0,915 g/cm³) aufgetragen. Das Auftragsgewicht der Polyethylenschicht betrug 26 g/m². Bei der Extrusion wurde ein hochglänzender Kühlzylinder eingesetzt. Die Oberfläche des Polyolefin beschichteten Papiers hatte eine Rauhigkeit Rz von 0,975 µm.

Auf das erhaltene Basispapier wurde eine Trennschicht der folgenden Zusammensetzung aufgetragen:

| | |
|---|---|
| Styrol/Butadien-Copolymer (Styronal® 4204) | 10 Gew.% |
| Polyvinylacetat (Polyco® 2149) | 89 Gew.% |
| polyfunktionelles Aziridin (Neocryl® CX-100) | 1 Gew.% |

Das Auftragsgewicht betrug 0,5 g/m². Alle Gewichtsangaben beziehen sich auf das Gewicht der getrockneten Schicht.

### Beispiel 2

Auf das Basispapier nach Beispiel 1 wurde eine Trennschicht der folgenden Zusammensetzung aufgetragen:

| | |
|---|---|
| Styrol/Butadien-Copolymer (Styronal® 4204) | 40 Gew.% |
| Polyvinylacetat (Polyco® 2149) | 58 Gew.% |
| polyfunktionelles Aziridin (Neocryl® CX-100) | 2 Gew.% |

Das Auftragsgewicht betrug 0,4 g/m². Alle Gewichtsangaben beziehen sich auf das Gewicht der getrockneten Schicht.

### Beispiel 3

Auf das Basispapier nach Beispiel 1 wurde eine Trennschicht der folgenden Zusammensetzung aufgetragen:

| | |
|---|---|
| Styrol/Butadien-Copolymer (Styronal® 4204) | 70 Gew.% |
| Polyvinylacetat (Polyco® 2149) | 28 Gew.% |
| polyfunktionelles Aziridin (Neocryl® CX-100) | 2 Gew.% |

Das Auftragsgewicht betrug 0,35 g/m². Alle Gewichtsangaben beziehen sich auf das Gewicht der getrockneten Schicht.

### Beispiel 4

Auf das Basispapier nach Beispiel 1 wurde eine Trennschicht der folgenden Zusammensetzung aufgetragen:

| | |
|---|---|
| Styrol/Butadien-Copolymer (Styronal® 4204) | 20 Gew.% |
| Polyvinylacetat (Polyco® 2149) | 69 Gew.% |
| polyfunktionelles Aziridin (Neocryl® CX-100) | 1 Gew.% |
| kolloidales Siliciumdioxid (Aerosol® 300, mittlere Teilchengröße 6 nm) | 10 Gew.% |

Das Auftragsgewicht betrug 0,9 g/m². Alle Gewichtsangaben beziehen sich auf das Gewicht der getrockneten Schicht.

### Beispiel 5

Für das Beispiel 5 wurde auf das Basispapier ein Polyethylen niedriger Dichte (0,928 g/cm³) mittels Schmelzextrusion aufgetragen. Das Auftragsgewicht der Polyethylenschicht betrug 25 g/m². Bei der Extrusion wurde ein hochglänzender Kühlzylinder eingesetzt. Die Oberfläche des polyolefinbeschichteten Papiers hatte eine Rauhigkeit Rz von 1,699 µm.

Auf dieses polyolefinbeschichtete Basispapier wurde eine Trennschicht aufgetragen, die folgende Zusammensetzung hatte:

| | |
|---|---|
| Styrol/Butadien-Copolymer (Styronal® 4204) | 20 Gew.% |
| Polyvinylacetat (Polyco® 2149) | 49 Gew.% |
| polyfunktionelles Aziridin (Neocryl® CX-100) | 1 Gew.% |
| kolloidales Siliciumdioxid (Aerosol® 300, mittlere Teilchengröße 6 nm) | 20 Gew.% |

Das Auftragsgewicht betrug 1,2 g/m². Alle Gewichtsangaben beziehen sich auf das Gewicht der getrockneten Schicht.

### Vergleichsbeispiel

Als Vergleichsbeispiel wurde das polyolefinbeschichtete Basispapier von Beispiel 1 ohne die Trennschicht verwendet. Es erfolgte eine Coronabehandlung der Polyolefinoberfläche zur Erhöhung der Oberflächenspannung.

Auf die Basispapiere der Beispiele 1 bis 5 und des Vergleichsbeispiels wurde mit einem Laminator eine Polyvinylchloridfolie aufgetragen. Gemessen wurden die Abzugskräfte an frischen und an gealterten (24 Stunden bei 70°C) Proben und an Proben, die 7, 14 und 28 Tage bei 23°C und 50% relativer Feuchte gelagert wurden. Das Abziehen der Vinylfolie erfolgte mit einem Instron-Tester bei einem Abzugswinkel von 180°. Die Ergebnisse sind in der Tabelle 1 gezeigt.

**Tabelle 1**

| **Bestimmung der Abzugskräfte in g/inch** | | | | | |
|---|---|---|---|---|---|
| Muster | frisch | 24 Std 70°C | 7 Tage | 14 Tage | 28 Tage |
| Beispiel 1 | 19 | 25 | 19 | 21 | 24 |
| Beispiel 2 | 21 | 25 | 22 | 24 | 25 |
| Beispiel 3 | 24 | 29 | 24 | 27 | 29 |
| Beispiel 4 | 20 | 25 | 21 | 24 | 24 |
| Beispiel 5 | 19 | 24 | 21 | 23 | 24 |
| Vergl. Beispiel | 17 | 11 | 16 | 14 | 9 |

Die Ergebnisse der Haftungsprüfung zeigen, daß die Abzugkräfte auch nach Lagerung nicht abfallen und somit eine gute Haftung über einen langen Zeitraum gewährleistet ist.

## Patentansprüche

1. Trägermaterial mit Trenneigenschaften für Vinylfolien, umfassend einen Träger, der ein Rohpapier, eine aus einem thermoplastischen Harz erzeugte und auf das Rohpapier aufgebrachte Polymerschicht und eine Trennschicht umfaßt, **dadurch gekennzeichnet, daß** die Trennschicht gebildet ist durch ein Gemisch aus Styrol/Butadien-Copolymer, Polyvinylacetat und einem Vernetzungsmittel, wobei die Trennschicht auf der Polymerschicht angeordnet ist.

2. Trägermaterial nach Anspruch 1, **dadurch gekennzeichnet, daß** das Gewichtsverhältnis Styrol/Butadien-Copolymer zu Polyvinylacetat 1:10 bis 10:1 beträgt.

3. Trägermaterial nach einem der Ansprüche 1 oder 2, **dadurch gekennzeichnet, daß** die Trennschicht ein Vernetzungsmittel in einer Menge von 0,1 bis 3,0 Gew.%, bezogen auf das Trockengewicht der Trennschicht, enthält.

4. Trägermaterial nach Anspruch 3, **dadurch gekennzeichnet, daß** das Vernetzungsmittel ein polyfunktionelles Aziridin ist.

5. Trägermaterial nach einem der Ansprüche 1 bis 4, **dadurch gekennzeichnet, daß** die Trennschicht ein Pigment enthält.

6. Trägermaterial nach Anspruch 5, **dadurch gekennzeichnet, daß** das Pigment ein kolloidales Silica mit einer Teilchengröße von 0,1 bis 1000 nm ist.

7. Trägermaterial nach Anspruch 1, **dadurch gekennzeichnet, daß** die Polymerschicht eine Polyolefinschicht ist.

## Claims

1. A support material with release properties for vinyl films comprising a support that comprises a raw paper, a polymer layer prepared of a thermoplastic resin and applied onto the raw paper, and a subbing layer, **characterized in that** the subbing layer is formed by a mixture of styrene/butadiene-copolymer, polyvinyl acetate and a cross-linking agent, wherein the subbing layer is provided on the polymer layer.

2. The support material according to claim 1, **characterized in that** the weight ratio styrene/butadiene-copolymer to polyvinyl acetate is 1:10 to 10:1.

3. The support material according to claim 1 or 2, **characterized in that** the subbing layer comprises a cross-linking agent present in an amount of 0.1 to 3.0 wt.% relative to the dry weight of the subbing layer.

4. The support material according to claim 3, **characterized in that** the cross-linking agent is a polyfunctional aziridine.

5. The support material according to any of claims 1 to 4, **characterized in that** the subbing layer comprises a pigment.

6. The support material according to claim 5, **characterized in that** the pigment is a colloidal silica with a particle size of from 0.1 to 1000 nm.

7. The support material according to claim 1, **characterized in that** the polymer layer is a polyolefin layer.

## Revendications

1. Matériau support ayant des caractéristiques de séparation pour films de vinyle, lequel comprend un substrat, qui est composé de papier brut, d'une couche de polymère, fabriquée en résine thermoplastique et appliquée sur le papier brut, et d'une couche de séparation, **caractérisé en ce que** la couche de séparation est formée par un mélange de copolymère de styrène- butadiène, de poly-acétate de vinyle et d'un agent de réticulation, la couche de séparation étant disposée sur la couche de polymère.

2. Matériau support selon la revendication 1, **caractérisé en ce que** le rapport pondéral copolymère de styrène butadiène : poly-acétate de vinyle est de 1 : 10 à 10 : 1.

3. Matériau support selon l'une des revendications 1 ou 2, **caractérisé en ce que** la couche de séparation contient un agent de réticulation en quantité de 0, 1 à 3,0 % en poids par rapport au poids à l'état sec de la couche de séparation.

4. Matériau support selon la revendication 3, **caractérisé en ce que** l'agent de réticulation est une aziridine polyfonctionnelle.

5. Matériau support selon l'une des revendications 1 à 4, **caractérisé en ce que** la couche de séparation contient un pigment.

6. Matériau support selon la revendication 5, **caractérisé en ce que** le pigment est une silice colloïdale, dont la grandeur de particules est de 0,1 à 1000 nm.

7. Matériau support selon la revendication 1, **caractérisé en ce que** la couche de polymère est une couche polyoléfine.
